# EUROPÄISCHE PATENTANMELDUNG

(11) **EP 3 395 728 A1**
(43) Veröffentlichungstag der Anmeldung: **31.10.2018**
(21) Anmeldenummer: 17000699.3
(22) Anmeldetag: 24.04.2017
(51) Int. Cl.: B65G 47/31, B65G 15/24, B65G 43/08

(54) **EINSTELLEN DES ABSTANDES VON ZU FÖRDERNDEN STÜCKGÜTERN**

(71) Anmelder: Siemens Aktiengesellschaft, 80333 München (DE)
(72) Erfinder: Aschpurwis, Carsten, D-78464 Konstanz (DE)
(74) Vertreter: Maier, Daniel Oliver

(57) **Zusammenfassung**

Die Erfindung betrifft eine Fördervorrichtung (1) und ein Verfahren zum Anpassen von Abständen (A) von zu fördernden Stückgütern (7). Um die Abstände (A) an einen Soll-Abstand anzupassen, werden die Stückgüter (7) individuell bestimmten Beschleunigungen ausgesetzt.+

## Beschreibung

Die Erfindung betrifft eine Fördervorrichtung zur Förderung von Stückgut in einer Förderrichtung, mit einer Förderstrecke. Ferner betrifft die Erfindung ein Verfahren zum Anpassen von Abständen von Stückgütern zueinander, während die Stückgüter gefördert werden. Des Weiteren betrifft die Erfindung ein Computerprogrammprodukt.

Fördervorrichtungen zur Förderung von Stückgut, Verfahren zum Anpassen von Abständen von Stückgütern zueinander, während die Stückgüter gefördert werden, und Computerprogrammprodukte sind allgemein bekannt. Bekannte Fördervorrichtungen und Verfahren zur Förderung und Anpassung von Abständen von zu fördernden Stückgütern beschleunigen jedes der Stückgüter jedoch identisch, sodass vorhandene Abstände identisch vergrößert oder verkleinert werden. Abstände so zu manipulieren, dass sie zumindest oder sogar genau einem Soll-Abstand entsprechen, ist mit den bekannten Fördervorrichtungen und Verfahren nicht möglich.

Die Aufgabe besteht also darin, eine Fördervorrichtung und ein Verfahren sowie ein Computerprogrammprodukt bereitzustellen, wobei Abstände zwischen Stückgütern während deren Förderung so eingestellt werden können, dass die Abstände zumindest einem Soll-Abstand entsprechen.

Erfindungsgemäß wird eine Fördervorrichtung zur Förderung von Stückgut in einer Förderrichtung mit einer Förderstrecke bereitgestellt, wobei die Förderstrecke einen eine Vielzahl von Förderelementen aufweisenden Anpassabschnitt zum Anpassen eines entlang der Förderrichtung der Förderstrecke verlaufenden Abstandes von Stückgütern auf der Förderstrecke zueinander aufweist, sodass der Abstand mindestens einen vorgegebenen Soll-Abstand entspricht, wobei die Fördervorrichtung ausgebildet ist, die Fördergeschwindigkeiten jedes der Förderelemente unabhängig von den anderen der Förderelemente einzustellen. Bei dem erfindungsgemäßen Verfahren zum Anpassen von Abständen von Stückgütern zueinander, während die Stückgüter gefördert werden, wird jedes der Stückgüter zum Anpassen des Abstandes an einen Soll-Abstand individuell für die jedes der Stückgüter bestimmten Beschleunigungen ausgesetzt, bis der Abstand der Stückgüter zueinander zumindest dem Soll-Abstand entspricht. Das Computerprogrammprodukt weist erfindungsgemäß Programmcodeanweisungen zur Durchführung des erfindungsgemäßen Verfahrens, wenn das Computerprogrammprodukt auf einer Steuereinrichtung ausgeführt wird, auf.

Dadurch, dass die Stückgüter individuell beschleunigt werden, deren Fördergeschwindigkeit also individuell erhöht oder verringert wird, kann der Abstand jedes der Stückgüter zum vorherigen und/oder zum nachfolgenden Stückgut individuell angepasst werden, sodass keine unnötig großen oder unzulässig kleinen Abstände entstehen und die Stückgüter optimal zueinander angeordnet, beispielsweise einer der Fördervorrichtung nachfolgenden Sortiervorrichtung, übergeben werden können.

Die erfindungsgemäße Lösung kann durch verschiedene, jeweils für sich vorteilhafte und, sofern nicht anders ausgeführt, beliebig miteinander kombinierbare Ausgestaltungen weiter verbessert werden. Auf diese Ausgestaltungsformen und die mit ihnen verbundenen Vorteile ist im Folgenden eingegangen.

So kann die Förderstrecke einen dem Anpassabschnitt vorgeschalteten Messabschnitt aufweisen, der eingerichtet ist, die entlang der Förderrichtung der Förderstrecke verlaufende Stücklänge individueller Stückgüter und aktuelle Abstände aufeinanderfolgender Stückgüter zueinander zu bestimmen. Hierfür kann der Messabschnitt einen Längensensor, beispielsweise einen optischen Sensor, etwa eine Lichtschranke, aufweisen, der Stückgüter und Lücken zwischen diesen Stückgütern während der Förderung erkennt und ein Messsignal erzeugt, anhand dessen die Stückgutlängen und die aktuellen Abstände ermittelt werden können. Da Stückgüter unterschiedliche Stückgutlängen aufweisen und die aktuellen Abstände voneinander abweichen können, erhöht der vorgeschaltete Messabschnitt die Genauigkeit, mit der der Anpassabschnitt den Abstand der Stückgüter zueinander an den Soll-Abstand anpasst.

Die Fördervorrichtung kann eine Steuereinrichtung aufweisen, die ausgebildet ist, die Geschwindigkeiten der Förderelemente anhand der bestimmten Stückgutlänge eines ausgewählten Stückguts und des aktuellen Abstands des ausgewählten Stückguts zu einem folgenden oder einem vorherigen Stückgut individuell so einzustellen, dass der Abstand des ausgewählten Stückguts zu dem folgenden und/oder dem vorherigen Stückgut nach dem Anpassabschnitt mindestens dem Soll-Abstand entspricht. Die Steuereinrichtung kann Messsignal empfangend mit dem Längensensor verbunden sein und somit die Förderelemente des Anpassabschnitts individuell für jedes der Stückgüter ansteuern, um die Abstände zwischen den Stückgütern während der Förderung der Stückgüter einfach anpassen zu können.

Die Länge der Förderelemente kann kleiner sein als die Summe der maximal zulässigen Förderlänge eines mit der Fördervorrichtung förderbaren Stückgutes und dem Fünffachen des aktuellen oder des Soll-Abstandes. Förderelemente, die noch länger sind, verschlechtern die Anpasseffizienz der Lücke und benötigen unnötig viel Bauraum. Beispielsweise kann die Länge der Förderelemente kleiner sein als die Summe der maximal zulässigen Förderlänge eines mit der Fördervorrichtung noch förderbaren Stückgutes und dem Vierfachen, dem Dreifachen oder dem Doppelten des aktuellen oder des Soll-Abstandes. Eine besonders hohe Anpasseffizienz ergibt sich, wenn die Länge der Förderelemente in einem Bereich liegt, der zwischen der maximal zulässigen Förderlänge zuzüglich dem doppelten des aktuellen oder des Soll-Abstandes und der maximal zulässigen Förderlänge liegt. Eine maximale Anpasseffizienz ergibt sich, wenn die Länge der Förderelemente der Summe der maximal zulässigen Förderlänge und dem aktuellen oder dem Soll-Abstand entspricht.

Um unterschiedlich lange Stückgüter effizient sortieren zu können, können ausgewählte aufeinander folgende Förderelemente zu Förderelementgruppen zusammengefasst werden. Je mehr Förderelemente eine Förderelementgruppe aufweist, desto größer kann die maximal zulässige Förderlänge sein. Weist die Förderelementgruppe weniger Förderelemente oder sogar nur ein Förderelement auf, so nimmt die maximal zulässige Förderlänge zwar ab. Allerdings können dann auch kurze Stückgüter besonders effizient zueinander angeordnet werden. Die Förderelementgruppen können beispielsweise durch die Steuereinrichtung flexibel und an die bestimmten Stückgutlängen der Stückgüter angepasst zusammengestellt werden, um unterschiedlichste Stückgüter so zueinander anordnen zu können, dass deren Abstand zueinander zumindest dem Soll-Abstand entspricht. Für jedes der Stückguter kann die Zusammenstellung und insbesondere die Anzahl der zusammengefassten Förderelemente an die Stückgutlänge dieses Stückgutes angepasst werden.

Die Förderelemente können sich in der Förderrichtung abschnittsweise überlappen, sodass beim Übergang von einem der Förderelemente zum folgenden Förderelement eine Stufe, insbesondere eine nach unten führende Stufe, vorhanden ist. Die Höhe der Stufe kann weniger als 2 cm, weniger als 1 cm und beispielsweise 5 mm, 4 mm, 3 mm, 2 mm oder sogar nur 1 mm betragen. Durch diesen Versatz der Transportelemente können selbst lückenlos aufeinanderfolgende Stückgüter voneinander getrennt werden beziehungsweise zueinander entlang der Förderrichtung verschoben werden, um einen zunehmenden Abstand zwischen diesen Stückgütern zu erreichen. Ferner kann bei bereits vorhandenen Lücken eher eine größere Beschleunigung über mehrere Transportelemente erreicht werden, um den Abstand in kürzerer Zeit ändern zu können. Beispielsweise kann die Länge der aneinander überlappenden Förderelemente der nicht überlappten Länge der Förderelemente entsprechen.

Die Förderelemente können eine entlang der Förderrichtung ansteigende Förderseite aufweisen, wobei die Stückgüter während der Förderung auf der Förderseite aufliegen. Durch die ansteigende Förderseite kann ebenfalls die Stufe zur Trennung direkt aneinander liegender Stückgüter erzeugt werden, wobei jedoch die Bauhöhe des Anpassabschnitts geringer ausfällt, als wenn sich die Förderelemente nur überlappen, also in unterschiedlichen und vertikal versetzten Ebenen angeordnet sind.

Optional können sich auch die Förderelemente mit der ansteigenden Förderseite entlang der Förderrichtung überlappen, um Lücken zwischen den Förderelementen zu vermeiden und um auch die absolute Länge und Höhe des Anpassabschnitts zu verringern.

Der Winkel, unter dem die Förderseite ansteigt, kann weniger als 5°, weniger als 4°, weniger als 3°, weniger als 2° oder weniger als 1° und insbesondere 0,5° betragen. Die Länge der einzelnen Förderelemente kann wieder entlang und parallel zur Förderseite gemessen werden, wobei die Länge die Länge des nicht überlappen Abschnitts der Förderseite in der Förderrichtung sein kann.

Mindestens eines der Förderelemente kann ein Förderband oder mehrere aufeinander folgende Förderbänder aufweisen, von denen alle oder ausgewählte beziehungsweise einzelne unterschiedlich antreibbar sind. Um die minimale Länge des Förderelementes weiter zu verringern, können die Förderelemente eine bandfreie Förderrolle oder mehrere aufeinanderfolgende bandfreie Förderrollen aufweisen. Von den Förderrollen können wieder alle, ausgewählte oder einzelne angesteuert werden und zum Beispiel zum Förderelement gruppiert werden, um die Beschleunigung individuell an die Abweichung des aktuellen Abstands zum Soll-Abstand anzupassen und/oder die Länge des Förderelementes individuell an die Länge des Stückgutes.

Der Abstand zweier Rollachsen aufeinander folgender Förderrollen zueinander kann kleiner sein, als die halbe minimale zulässige Förderlänge eines mit der Fördervorrichtung förderbaren Stückgutes. Je kleiner der Abstand der Rollachsen ist, desto ruhiger lässt sich das Stückgut über die Förderrollen fördern.

Gemäß einer Ausführungsform des Verfahrens kann die Beschleunigung basierend auf der Stückgutlänge und dem bestimmten Abstand ermittelt werden, insbesondere individuell für jedes Stückgut, um jedes der Stückgüter so zum vorherigen und/oder zum nachfolgenden Stückgut positionieren zu können, dass der Abstand zum vorherigen und/oder nachfolgenden Stückgut mindestens dem Soll-Abstand entspricht.

Ferner kann gemäß einer weiteren Ausführungsförm des Verfahrens jedes der Stückgüter mehrfach und/oder mehrfach unterschiedlich beschleunigt werden, um den Abstand für jedes der Stückgüter gezielt anpassen zu können, selbst wenn der Abstand stark vom Soll-Abstand abweicht.

Wenn der Abstand der Stückgüter zueinander zumindest dem Soll-Abstand entspricht, kann gemäß einer weiteren Ausführungsform des Verfahrens die Beschleunigung null betragen, sodass die Fördergeschwindigkeit des Einstellabschnitts der Transportgeschwindigkeit des Messabschnitts entspricht. Abstände zwischen Stückgütern werden also nicht unnötig geändert.

Um sicherstellen zu können, dass der Abstand zwischen allen der vermessenen Stückgüter zumindest dem Soll-Abstand entspricht, können die Stückgüter so lange individuell angepasst beschleunigt werden, bis auch der geringste Abstand zumindest dem Soll-Abstand entspricht.

Abhängig von ihrer Stückgutlänge jedes der Stückgüter individuell für jedes der Stückgüter eine Stecke festgelegt werden, in der die Fördervorrichtung das Stückgut mit einer individuell bestimmten Fördergeschwindigkeit fördert, um den Abstand des Stückgutes zu einem vorherigen und/oder einem folgenden Stückgut effizient anpassen zu können.

Zwischen zwei aufeinander folgenden Beschleunigungen kann der Abstand erneut gemessen werden, um unbeabsichtigte Positionsänderungen der Stückgüter auf der Fördervorrichtung erkennen und korrigieren zu können.

Mit Hilfe der erfindungsgemäßen Fördervorrichtung und des erfindungsgemäßen Verfahrens kann der Abstand der Stückgüter zueinander nach der Anpassung des Abstands zumindest dem Soll-Abstand entsprechen, wobei der Abstand der Stückgüter zueinander nach der Anpassung tolerierbare Abweichungen vom Soll-Abstand aufweisen kann.

Der Ausdruck zumindest kann auch bedeuten, dass die Abstände nach der Anpassung genau dem Soll-Abstand entsprechen. Der Soll-Abstand kann ein vorbestimmtes Soll-Abstandsintervall sein.

Die Stückgüter können beliebige Stückgüter und beispielsweise Versandgüter, etwa Pakete, sein.

Beim positiven Beschleunigen eines der Stückgüter wird dessen Geschwindigkeit erhöht, um beispielsweise den Abstand des Stückgutes zum vorherigen Stückgut zu verringern und/oder den Abstand zum folgenden Stückgut zu erhöhen. Beim negativen Beschleunigen, also beim Verzögern oder Abbremsen, eines der Stückgüter wird dessen Geschwindigkeit verringert, um beispielsweise den Abstand des Stückgutes zum vorherigen Stückgut zu erhöhen und/oder den Abstand zum folgenden Stückgut zu verringern.

Das Computerprogrammprodukt kann auf einem Datenträger bereitgestellt sein. Wird das Computerprogrammprodukt vom Datenträger in die Steuereinrichtung geladen, um die Fördervorrichtung zu steuern, so kann die Steuereinrichtung das Computerprogrammprodukts zur Anpassung des Abstandes ausführen. Der Datenträger kann also in der Steuereinrichtung installiert oder mit dieser verbindbar sein. Alternativ kann der Datenträger als ein Nachrüstelement für bestehende Steuereinrichtungen bereitgestellt sein. Der Datenträger kann als ein USB- Stick, eine Diskette, ein optischer Datenträger (CD, DVD, etc.) oder als ein sonstiger transportabler Datenträger bereit gestellt sein. Ferner kann der Datenträger online zugänglich sein, sodass das Computerprogrammprodukt beispielsweise als Download bereitgestellt wird. Ferner kann das Computerprogrammprodukt auf einer entfernt von der Fördervorrichtung angeordneten Steuereinrichtung betrieben werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figuren 1 bis 4 Ausführungsbeispiele der erfindungsgemäßen Fördervorrichtung,
Figur 5 ein den Zusammenhang zwischen der Anpasseffizienz des Abstandes und der Länge der Förderelemente darstellendes Diagramm,
Figuren 6a, 6b ein beispielhaftes Ausführungsbeispiel des erfindungsgemäßen Verfahrens als ein Flussdiagramm und
Figur 7 ein beispielhaftes Ausführungsbeispiel des erfindungsgemäßen Computerprogrammproduktes.

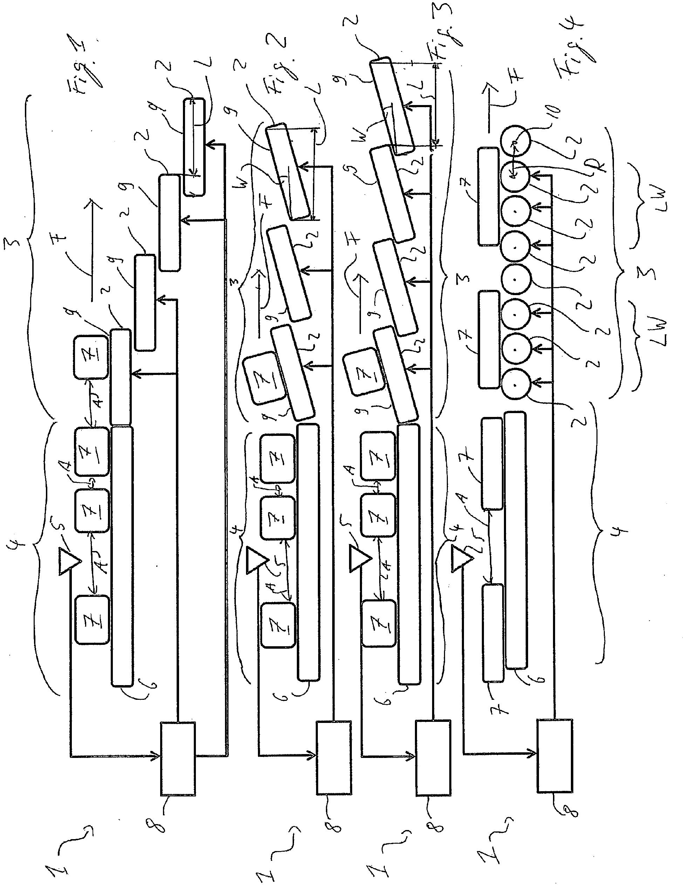

Zunächst sind Aufbau und Funktion eines Ausführungsbeispiels der erfindungsgemäßen Fördervorrichtung mit Bezug auf das Ausführungsbeispiel der Figur 1 beschrieben.

Figur 1 zeigt die Fördervorrichtung 1 schematisch in einer Seitenansicht. Die Fördervorrichtung 1 weist eine Vielzahl von Förderelementen 2 auf, welche gemeinsam Teil eines Anpassabschnitts 3 zur Anpassung von Stückgutabständen der Fördervorrichtung 1 bilden.

Dem Anpassabschnitt 3 ist in einer Förderrichtung F der Fördervorrichtung 1 zumindest ein Messabschnitt 4 mit einem Längensensor 5 und einem Transportelement 6 vorgeordnet. Das Transportelement 6 kann einem der Förderelemente 2 entsprechen und beispielsweise mindestens ein Transportband sein oder mehrere Transportrollen aufweisen. Der Längensensor 5 ist so angeordnet, dass er die Länge von Stückgütern 7, die mit der Fördervorrichtung 1 gefördert werden sollen, sowie den aktuellen Abstand A der Stückgüter 7 zueinander entlang der Förderrichtung F, bestimmen kann. Zum Beispiel ist der Längensensor 5 ein optischer Sensor und etwa eine Lichtschranke.

Um die Stückgutlänge und den aktuellen Abstand A bestimmen zu können, weist die Fördervorrichtung 1 des Ausführungsbeispiels der Figur 1 eine Steuereinrichtung 8 auf. Die Steuereinrichtung 8 ist Längenmesssignal übertragend mit dem Längensensor 5 verbunden. In der Steuereinrichtung 8 sind ferner Daten zur Transportgeschwindigkeit des Transportelementes 6 gespeichert, sodass anhand der Längenmessdaten und der Transportgeschwindigkeitsdaten die Stückgutlängen und der aktuelle Abstand A in der Steuereinrichtung 8 berechnet werden kann. Die Steuereinrichtung 8 kann einen Mikroprozessor beinhalten und beispielsweise ein Computer, etwa ein Personalcomputer oder ein Steuercomputer zur Steuerung der Fördervorrichtung 1, sein.

Anhand der ermittelten Stückgutlängen und Abstände A kann .die Steuereinrichtung 8 die Fördergeschwindigkeiten der Förderelemente 2 des Anpassabschnitts 3 so vorgeben, dass die. Förderelemente 2 jedes der Stückgüter 7 so schnell fördern, dass der aktuelle Abstand A spätestens am in der Förderrichtung F liegenden Ende des Anpassabschnitts 3 einem Soll-Abstand entspricht. Dabei kann sich die Fördergeschwindigkeit zumindest eines der Förderelemente 2 von anderen der Förderelemente 2 und insbesondere auch von der Transportgeschwindigkeit des Transportelementes 6 unterscheiden, sodass die Stückgüter 7 individuell unterschiedlich von den Förderelementen 2 beschleunigt werden. Für jedes der Stückgüter 7 kann die Steuereinrichtung 8 die Fördergeschwindigkeit jedes der Förderelemente 2 individuell anpassen.

Die Förderelemente 2 können entlang der Förderrichtung F in einer Ebene und hintereinander angeordnet sein. Im Ausführungsbeispiel der Figur 1 sind die Förderelemente 2 jedoch so angeordnet, dass sie abschnittsweise quer zur Förderrichtung F hintereinander angeordnet sind, sich also in der Förderrichtung F abschnittsweise überlappen. Allerdings verlaufen Förderseiten 9 der Förderelemente 2 parallel zur Förderrichtung F und beispielsweise horizontal, also vertikal parallelversetzt. Zwischen in der Förderrichtung F aufeinanderfolgende Förderelemente 2 bilden sich also Stufen, welche auch aneinander anliegende Stückgüter 7 voneinander trennen können.

Eine Länge L der Förderelemente 2 ist vorzugsweise kleiner, als die Summe der maximal zulässigen Stückgutlänge von mit der Fördervorrichtung 1 förderbaren Stückgütern und einem Mehrfachen des aktuellen oder des Soll-Abstandes. Die Länge L kann die Länge des nicht vom vorherigen Förderelement 2 überlappten Abschnitts des Förderelementes 2 sein.

Figur 2 zeigt ein weiteres Ausführungsbeispiel der Fördervorrichtung 1 schematisch in einer Seitenansicht. Für Elemente, die in Form und/oder Funktion Elemente des Ausführungsbeispiels der Figur 1 entsprechen, sind dieselben Bezugszeichen verwendet. Der Kürze halber ist im Folgenden lediglich auf die Unterschiede zum Ausführungsbeispiel der Figur 1 eingegangen.

Die Förderelemente 2 des Ausführungsbeispiels der Figur 2 überlappen sich in der Förderrichtung F nicht. Allerdings verlaufen die Förderseiten 9 zur Förderrichtung F und beispielsweise zur Horizontalen unter einem Winkel W, der größer als 0° ist, sodass die Förderseiten 9 in der Förderrichtung F ansteigen. Durch diese überlappungsfreie Anordnung der Förderelemente 2 mit den ansteigenden Förderseiten 9 entstehen wiederum Stufen zur Trennung von aneinander angrenzenden Stückgütern 7.

Figur 3 zeigt ein weiteres Ausführungsbeispiel der erfindungsgemäßen Fördervorrichtung 1 schematisch in einer Seitenansicht. Für Elemente, die in Form und/oder Funktion Elementen der Ausführungsbeispiele der Figuren 1 und 2 entsprechen, sind dieselben Bezugszeichen verwendet. Der Kürze halber ist im Folgenden lediglich auf die Unterschiede zu den Ausführungsbeispielen der Figuren 1 und 2 eingegangen.

Die Förderseiten 9 des Ausführungsbeispiels der Figur 3 verlaufen wie die Förderseiten 9 des Ausführungsbeispiels der Figur 2 unter dem Winkel W zur Förderrichtung F beziehungsweise zur Horizontalen. Allerdings überlappen sich die Förderelemente 2 des Ausführungsbeispiels der Figur 3 in der Förderrichtung F. Durch diese verschindelte Anordnung der Förderelemente 2 entsteht die Stufe zur Trennung aneinander angrenzender Stückgüter 7, wobei Lücken zwischen den Förderelementen 2 vermieden werden und die Gesamtlänge der Fördervorrichtung 1 reduziert wird. Die Länge L der verkippten Förderelemente 2 entspricht der Länge des nicht vom vorherigen Förderelement 2 überlappten Abschnitts der Förderseiten 9 parallel zur Förderrichtung F.

In den Ausführungsbeispielen der Figuren 1 bis 3 sind die Förderelemente 2 beispielhaft als Förderbänder dargestellt.

Figur 4 zeigt ein weiteres Ausführungsbeispiel der erfindungsgemäßen Fördervorrichtung 1 schematisch in einer Seitenansicht. Für Elemente, die in Form und/oder Funktion Elementen der Ausführungsbeispiele der bisherigen Figuren entsprechen, sind die Bezugszeichen verwendet. Der Kürze halber ist im Folgenden lediglich auf die Unterschiede zu den bisherigen Ausführungsbeispielen eingegangen.

Die Förderelemente 2 der Figur 4 sind beispielhaft als Förderrollen mit zentralen Rollachsen 10 dargestellt. Insbesondere wenn die Förderelemente 2 horizontal zueinander ausgerichtet und in der Förderrichtung F überlappungsfrei hintereinander angeordnet sind, wie es beispielsweise im Ausführungsbeispiel der Figur 4 dargestellt ist, können die Förderelemente 2 nicht nur einzeln unterschiedlich angesteuert werden. Vielmehr können die Förderelemente 2 auch zu Förderelementgruppen zusammen gefasst sein, um die wirksame Länge LW der Förderelementgruppen an die Stückgutlänge anpassen zu können. Somit kann die wirksame Länge LW für die Stückgutlänge eines jeden Stückgutes variabel angepasst werden, um Stückgüter unterschiedlicher Stückgutlänge besonders effizient sortieren zu können. Auch Förderbänder können zu Förderelementgruppen zusammengefasst werden.

Beispielhaft zeigt das Ausführungsbeispiel der Figur 4 eine Förderelementgruppe mit drei Förderelementen 2, welche in der Förderrichtung F direkt auf das Transportelement 6 folgen. Auf diese erste Förderelementgruppe folgt ein optionales, nicht angetriebenes Förderelement 2, beispielsweise eine mitlaufende Förderrolle. Weiter in der Förderrichtung F folgt eine weitere Förderelementgruppe, wiederum mit drei Förderelementen 2. Die Anzahl der zusammengeschalteten Förderelemente 2 kann variiert werden, um die wirksame Länge LW zu verändern. Besteht eine Förderelementgruppe nur aus einem einzelnen Förderelement 2, so entspricht die wirksame Länge LW der Förderelementlänge L.

Ein Rollachsenabstand R aufeinanderfolgender und als Förderrollen ausgebildeter Förderelemente 2 ist vorzugsweise kleiner als die halbe minimal zulässige Stückgutlänge eines mit der Fördervorrichtung 1 gerade noch förderbaren Stückgutes, um ein ruhiges und vibrationsarmes Fördern des Stückgutes zu gewährleisten.

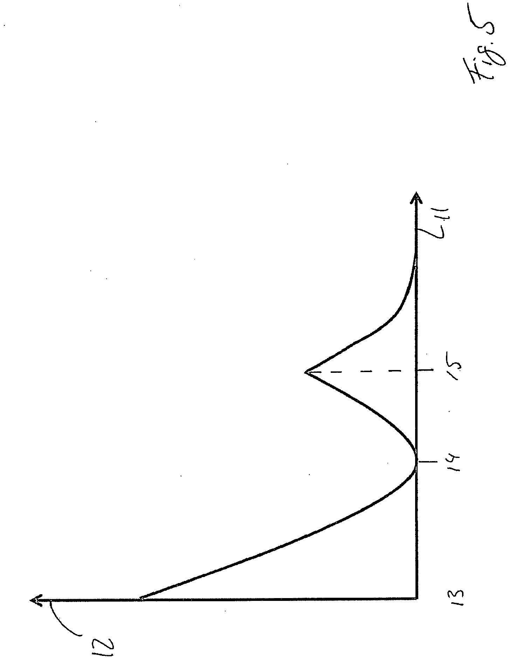

Figur 5 zeigt ein schematisches Diagramm, welches beispielhaft den Zusammenhang zwischen der Förderelementlänge L beziehungsweise der wirksamen Länge LW und der Anpasseffizienz des Anpassabschnitts 3 bei der Anpassung des Abstands A zeigt. Auf der horizontalen oder X-Achse 11 ist dabei die Länge L beziehungsweise die wirksame Länge LW abgetragen. Die vertikale oder Y-Achse 12 repräsentiert die Anpasseffizienz. Je größer die Anpasseffizienz ist, desto schneller können die Abstände an den Soll-Abstand angepasst werden, sodass der Anpassabschnitt 3 so kurz wie möglich ausgebildet sein kann, um Bauraum zu sparen, und sodass möglichst viele Stückgüter in kurzer Zeit zumindest oder genau im Soll-Abstand zueinander angeordnet werden können.

Im Ursprung des Koordinatensystems 13 beträgt die Länge L oder die wirksame Länge LW null. Hier hat die Anpasseffizienz ihr Maximum. Förderelemente 2 ohne eine Länge L, also ohne Ausdehnung in der Förderrichtung F, sind jedoch eher theoretisch und praktisch nicht ohne Weiteres herzustellen. Nimmt die Länge L beziehungsweise die wirksame Länge LW zu, so nimmt die Anpasseffizienz ab, bis sie den Abschnitt 14 der Achse 11 erreicht. Im Abschnitt 14 hat die Anpasseffizienz ein Minimum, wobei in Abschnitt 14 die Länge beziehungsweise die wirksame Länge der Stückgutlänge entspricht. Nimmt nun die Länge beziehungsweise die wirksame Länge wieder zu, so erreicht die Anpasseffizienz in Abschnitt 15 ein lokales Maximum, nach dem die Anpasseffizienz wieder abnimmt. In Abschnitt 15 entspricht die Länge beziehungsweise die wirksame Länge der Stückgutlänge zuzüglich dem mit dem Messabschnitt 4 gemessenem aktuellen Abstand oder zuzüglich dem Soll-Abstand.

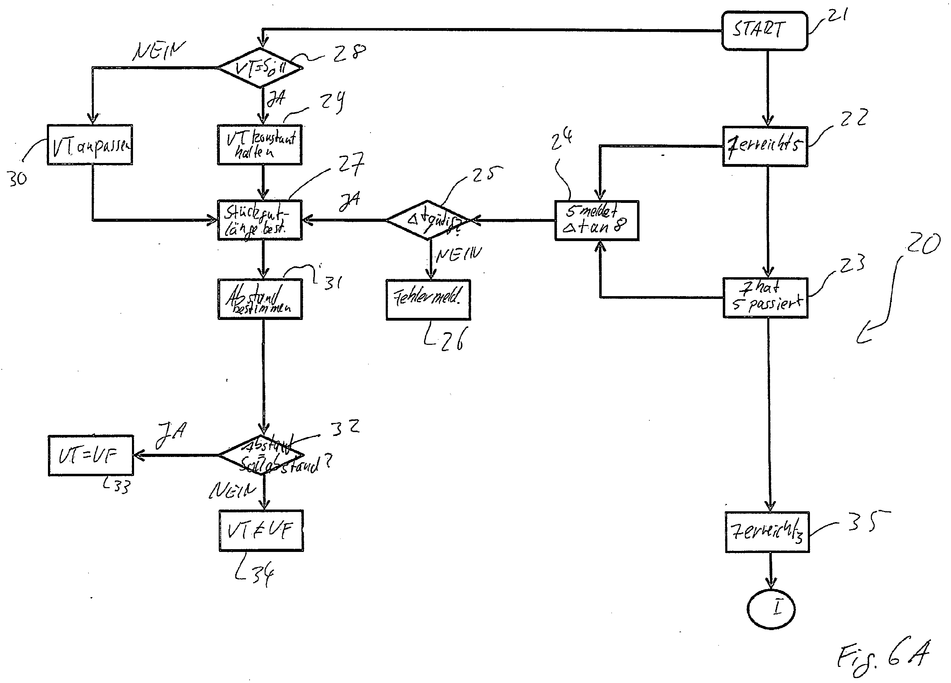

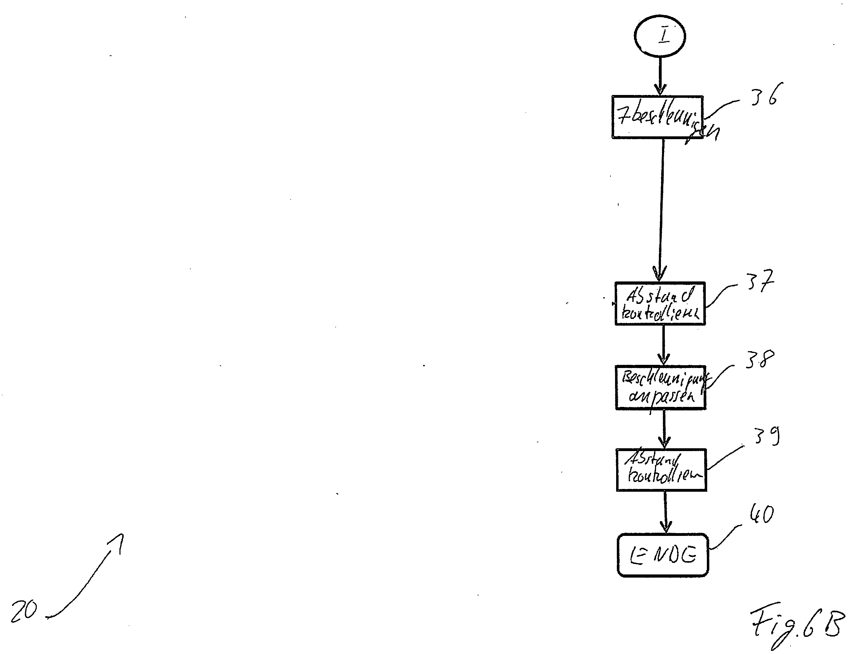

Die Figuren 6a und 6b zeigen ein sehr detailliertes Ausführungsbeispiel des erfindungsgemäßen Verfahrens als ein Flussdiagramm. Der besseren Übersichtlichkeit halber ist das Flussdiagramm auf zwei Zeichnungsseiten verteilt, wobei die Flussdiagrammabschnitte über eine Kontaktstelle I miteinander in Verbindung stehen.

Figur 6a zeigt ein Ausführungsbeispiel des erfindungsgemäßen Verfahrens 20 als ein Flussdiagramm. Im Verfahrensschritt 21 startet das Verfahren 20. Beispielsweise erreicht ein Stückgut 7 den Messabschnitt 4 der Fördervorrichtung 1 im Verfahrensabschnitt 21.

In folgenden Verfahrensabschnitten 22 bis 29 wird die Stückgutlänge des Stückgutes 7 bestimmt. Zum Beispiel erreicht das Stückgut 7 im Verfahrensabschnitt 22 den Längensensor 5. Im auf den Verfahrensabschnitt 22 folgenden Verfahrensabschnitt 23 hat das Stückgut 7 den Längensensor 5 gerade eben passiert. Der Längensensor 5 meldet die Zeitdifferenz zwischen den Verfahrensschritten 22 und 23 im Verfahrensabschnitt 24 an die Steuereinrichtung 8. Die Steuereinrichtung 8 ermittelt im Verfahrensabschnitt 25, ob die gemeldete Zeitdifferenz gültig ist, also erwarteten Werten entspricht. Ist die Zeitdifferenz nicht gültig, so folgt auf den Verfahrensabschnitt 25 der Verfahrensabschnitt 26, in dem die Steuereinrichtung 8 beispielsweise eine Fehlermeldung ausgeben kann. Ist die Zeitdifferenz jedoch gültig, so kann auf den Verfahrensschritt 25 der Verfahrensabschnitt 27 folgen, in dem die Steuereinrichtung 8 die Stückgutlänge bestimmt.

Um die Stückgutlänge bestimmen zu können, ist vorab im Verfahrensabschnitt 28 die Transportgeschwindigkeit VT des Messabschnittes 4 zu ermitteln. Ist die Transportgeschwindigkeit VT konstant, kann nach dem Verfahrensabschnitt 28 und vor dem Verfahrensabschnitt 27 der Verfahrensabschnitt 29 ausgeführt werden, in dem das Transportelement 6 des Messabschnittes 4 mit einer konstanten Transportgeschwindigkeit VT betrieben wird. Entspricht die Transportgeschwindigkeit VT nicht einer vorgegebenen Transportgeschwindigkeit, so kann nach dem Verfahrensabschnitt 28 und vor dem Verfahrensabschnitt 27 zunächst der Verfahrensabschnitt 30 ausgeführt werden, in dem die Transportgeschwindigkeit VT an die Soll-Geschwindigkeit angepasst wird.

Nach dem Bestimmen der Stückgutlänge im Verfahrensabschnitt 27 kann im nun folgenden Verfahrensabschnitt 31 der aktuelle Abstand A entlang der Förderrichtung F zwischen dem Stückgut 7 und dem folgenden und/oder vorherigen Stückgut 7 wie schon die Stückgutlänge bestimmt werden. Der aktuelle Abstand A entspricht dabei der Länge der Lücke zwischen den beiden Stückgütern 7.

Anhand der Stückgutlänge und des aktuellen Abstandes A kann beispielsweise die Steuereinrichtung 8 bestimmen, ob mehrere Förderelemente 2 zu einer Förderelementgruppe zusammengefasst werden sollen.

Im nun folgenden Verfahrensabschnitt 32 wird geprüft, ob der aktuelle Abstand A zwischen zwei aufeinanderfolgenden Stückgütern 7 einem Soll-Abstand entspricht. Entspricht der aktuelle Abstand A dem Soll-Abstand, so folgt auf den Verfahrensabschnitt 32 der Verfahrensabschnitt 33, in dem für zumindest eines der Stückgüter 7 eine Fördergeschwindigkeit VF des Anpassabschnitts 3 und wenigstens eines oder aller der Transportelemente 6 des Anpassabschnitts 3 gleich der Transportgeschwindigkeit VT des Messabschnitts 4 gesetzt wird. Unterscheidet sich der aktuelle Abstand A vom Soll-Abstand, so folgt auf den Verfahrensabschnitt 32 der Verfahrensabschnitt 34, in dem die Fördergeschwindigkeit VF für zumindest eines der Transportelemente 6 und für jedes der Stückgüter 7 individuell größer oder kleiner eingestellt wird, als die Transportgeschwindigkeit VT.

Spätestens nach den Verfahrensabschnitten 33 oder 34 kann der Verfahrensabschnitt 35 folgen, in dem das Stückgut 7 an den Anpassabschnitt 3 übergeben wird. Im nun folgenden Verfahrensabschnitt 36 wird das Stückgut 7 mit individuell bestimmten Beschleunigungswerten zumindest einmal oder sogar mehrfach gleich oder unterschiedlich beschleunigt, um den aktuellen Abstand A an den Soll-Abstand anzugleichen. Während sich das Stückgut 7 auf dem Anpassabschnitt 3 befindet, kann optional im folgenden Verfahrensabschnitt 37 der Abstand kontrolliert werden. Entspricht der kontrollierte Abstand noch nicht dem Soll-Abstand, so können die für dieses Stückgut 7 bestimmten Beschleunigungswerte angepasst 38 werden, beispielsweise indem die Fördergeschwindigkeiten VF noch folgender Förderelemente 2 individuell für dieses Stückgut 7 eingestellt werden. Im nun folgenden Verfahrensabschnitt 39 kann abschließend der Abstand erneut kontrolliert werden.

Im letztendlich folgenden Verfahrensabschnitt 40 endet das Verfahren 20, wobei im Verfahrensabschnitt 40 das Stückgut 7 an eine Sortiervorrichtung übergeben werden kann.

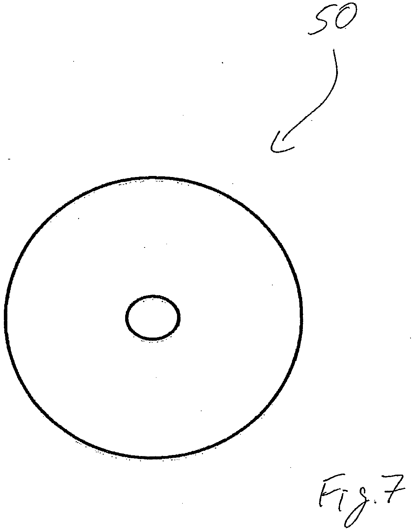

Figur 7 zeigt das erfindungsgemäße Computerprogrammprodukt 50 schematisch als Datenträger, zum Beispiel ein optischer Datenträger.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Fördervorrichtung
- 2: Förderelement
- 3: Anpassabschnitt
- 4: Messabschnitt
- 5: Längensensor
- 6: Transportelement
- 7: Stückgut
- 8: Steuereinrichtung
- 9: Förderseiten
- 10: Rollachsen
- 11: X-Achse
- 12: Y-Achse
- 13: Ursprung des Koordinatensystems
- 14: Förderelementlänge = Stückgutlänge
- 15: Förderelementlänge = Stückgutlänge plus Abstand
- 20: Verfahren
- 21: Start
- 22: Stückgut erreicht Längensensor
- 23: Stückgut hat Längensensor passiert
- 24: Zeitdifferenz an Steuereinrichtung übermitteln
- 25: Prüfen, ob Zeitdifferenz gültig
- 26: Fehlermeldung
- 27: Stückgutlücke bestimmen
- 28: Transportgeschwindigkeit des Messabschnittes ermitteln
- 29: Messabschnitt mit konstanter Transportgeschwindigkeit Betreiben
- 30: Transportgeschwindigkeit an Soll-Geschwindigkeit Anpassen
- 31: Abstand bestimmen
- 32: Entspricht Abstand Soll-Abstand?
- 33: Fördergeschwindigkeit des Messabschnitts entspricht Transportgeschwindigkeit
- 34: Fördergeschwindigkeit abweichend von Transportgeschwindigkeit
- 35: Stückgut an Anpassabschnitt übergeben
- 36: Stückgut beschleunigen
- 37: Abstand kontrollieren
- 38: Beschleunigungswerte anpassen
- 39: Abstand kontrollieren
- 40: Ende
- 50: Computerprogrammprodukt

- A: aktueller Abstand
- F: Förderrichtung
- L: Länge des Förderelementes
- LW: wirksame Länge
- R: Rollachsenabstand
- VF: Fördergeschwindigkeit des Förderelementes
- VT: Transportgeschwindigkeit des Messabschnitts
- W: Winkel

## Patentansprüche

1. Fördervorrichtung (1) zur Förderung von Stückgut (7) in einer Förderrichtung (F) mit einer Förderstrecke, die einen eine Vielzahl von Förderelementen (2) aufweisenden Anpassabschnitt (3) zum Anpassen eines entlang der Förderrichtung (F) der Förderstrecke verlaufenden Abstands (A) von Stückgütern (7) auf der Förderstrecke zueinander aufweist, sodass der Abstand (A) mindestens einem vorgegebenen Soll-Abstand entspricht, wobei die Fördervorrichtung (1) ausgebildet ist, die Fördergeschwindigkeiten (VF) jedes der Förderelemente (2) unabhängig von den anderen der Förderelementen (2) einzustellen, um den Abstand (A) anzupassen.

2. Fördervorrichtung (1) nach Anspruch 1,
**dadurch gekennzeichnet, dass**
die Förderstrecke einen dem Anpassabschnitt (3) vorgeschalteten Messabschnitt (4) aufweist, der eingerichtet ist, die entlang der Förderrichtung (F) der Förderstrecke verlaufende Stückgutlänge individueller Stückgüter (7) und aktueller Abstände (A) aufeinanderfolgender Stückgüter (7) zueinander zu bestimmen.

3. Fördervorrichtung (1) nach Anspruch 2,
**dadurch gekennzeichnet, dass**
die Fördervorrichtung (1) eine Steuereinrichtung (8) aufweist, die ausgebildet ist, die Fördergeschwindigkeiten (VF) der Förderelemente (2) anhand der bestimmten Stückgutlänge eines ausgewählten Stückguts (7) und des aktuellen Abstands (A) des ausgewählten Stückguts (7) zu einem folgenden und/oder vorherigen Stückgut (7) individuell so einzustellen, dass der Abstand (A) des ausgewählten Stückguts (7) zu dem folgenden und/oder dem vorherigen Stückgut (7) nach dem Anpassabschnitt (3) mindestens dem Soll-Abstand entspricht.

4. Fördervorrichtung (1) nach einem der Ansprüche 1 bis 3,
**dadurch gekennzeichnet, dass**
die Länge L der Förderelemente (2) kleiner ist, als die Summe der maximal zulässigen Förderlänge eines mit der Fördervorrichtung (1) förderbaren Stückgutes (7) und dem Fünffachen des Soll-Abstandes.

5. Fördervorrichtung (1) nach Anspruch 4,
**dadurch gekennzeichnet, dass**
die Fördervorrichtung (1) ausgebildet ist, mehrere aufeinander folgende Förderelemente (2) in Abhängigkeit von der Stückgutlänge eines ausgewählten der Stückgüter (7), dessen Abstand (A) zum vorherigen und/oder zum folgenden Stückgut (7) angepasst werden soll, als eine Förderelementgruppe mit identischer Fördergeschwindigkeit (VF) zusammenzufassen.

6. Fördervorrichtung (1) nach einem der Ansprüche 1 bis 5,
**dadurch gekennzeichnet, dass**
sich die Förderelemente (2) in der Förderrichtung (F) abschnittsweise überlappen.

7. Fördervorrichtung (1) nach einem der Ansprüche 1 bis 6, **dadurch gekennzeichnet, dass**
die Förderelemente (2) eine entlang der Förderrichtung (F) ansteigende Förderseite (9) aufweisen.

8. Fördervorrichtung (1) nach einem der Ansprüche 1 bis 7,
**dadurch gekennzeichnet, dass**
mindestens eines der Förderelemente (2) ein Förderband oder eine bandfreie Förderrolle aufweist.

9. Verfahren (20) zum Anpassen von Abständen (A) von Stückgütern (7) zueinander, während die Stückgüter (7) gefördert werden, bei dem jedes der Stückgüter (7) zum Anpassen des Abstandes (A) an einen Soll-Abstand individuell für jedes der Stückgüter (7) bestimmten Beschleunigungen ausgesetzt wird, bis der Abstand (A) der Stückgüter (7) zueinander zumindest dem Soll-Abstand entspricht.

10. Verfahren (20) nach Anspruch 9,
**dadurch gekennzeichnet, dass**
die Beschleunigung basierend auf der Stückgutlänge und dem bestimmten Abstand (A) ermittelt wird (34).

11. Verfahren (20) nach Anspruch 9 oder 10,
**dadurch gekennzeichnet, dass**
jedes der Stückgüter (7) mehrfach und/oder mehrfach unterschiedlich beschleunigt wird (36).

12. Verfahren (20) nach einem der Ansprüche 9 bis 11,
**dadurch gekennzeichnet, dass**
die Beschleunigung null beträgt, wenn der Abstand (A) der Stückgüter (7) zueinander zumindest dem Soll-Abstand entspricht (33).

13. Verfahren (20) nach einem der Ansprüche 9 bis 12,
**dadurch gekennzeichnet, dass**
die Stückgüter (7) so lange individuell angepasst beschleunigt werden, bis auch der geringste Abstand (A) zwischen allen Stückgütern (7) zumindest dem Soll-Abstand entspricht.

14. Verfahren (20) nach einem der Ansprüche 9 bis 13,
**dadurch gekennzeichnet, dass**
abhängig von ihrer Stückgutlänge jedes der Stückgüter (7) individuell für jedes der Stückgüter (7) eine Stecke festgelegt wird, in der die Fördervorrichtung (1) das Stückgut (7) mit einer individuell bestimmten Fördergeschwindigkeit (VF) fördert.

15. Computerprogrammprodukt (50), wobei das Computerprogramprodukt (50) Programmiercode-Anweisungen zur Durchführung des Verfahrens (20) nach einem der Ansprüche 9 bis 14, wenn das Computerprogrammprodukt (50) auf einer Steuereinrichtung (8) ausgeführt wird, aufweist.
